# EUROPÄISCHE PATENTSCHRIFT

(11) **EP 3 523 587 B1**
(45) Veröffentlichungstag und Bekanntmachung des Hinweises auf die Patenterteilung: **04.03.2020**
(21) Anmeldenummer: 17781473.8
(22) Anmeldetag: 10.10.2017
(51) Int. Cl.: F28C 1/00

(54) **KÜHLAGGREGAT**
COOLING ASSEMBLY
SYSTÈME DE RÉFRIGÉRATION

(30) Priorität: 10.10.2016 DE 102016119219
(43) Veröffentlichungstag der Anmeldung: 14.08.2019
(73) Patentinhaber: Cabero Wärmetauscher GmbH & Co. Kg, 82284 Grafrath (DE)
(72) Erfinder: CABERO, Laurentino, Oskar, 86899 Landsberg am Lech (DE)
(74) Vertreter: Grättinger Möhring von Poschinger Patentanwälte Partnerschaft mbB
(86) Internationale Anmeldenummer: PCT/EP2017/075787
(87) Internationale Veröffentlichungsnummer: WO 2018/069305

(56) Entgegenhaltungen:
- CH-A5- 684 966
- DE-A1- 3 807 784
- FR-A7- 2 331 257
- JP-A- S5 237 249

## Beschreibung

Die vorliegende Erfindung betrifft ein Kühlaggregat, umfassend eine Verdunstungskühleinheit mit einem Verdunstungswasserkreislauf und einem diesem ausgesetzten Wärmetauscher für das zu kühlende Medium, wobei der Verdunstungswasserkreislauf ein Sammelbecken, eine Verdunstungswasserpumpe, einen Verdunstungswasserverteiler und eine einer Luftströmung ausgesetzte Verdunstungsstrecke aufweist und der Wärmetauscher in dem Sammelbecken angeordnet und von dem dort vorhandenen Wasser umspült ist. Die vorliegende Erfindung betrifft insbesondere ein Kühlaggregat nach dem Oberbegriff des Anspruchs 1, wie in FR2 331 257 illustriert.

Bei üblichen auf dem Prinzip der Nasskühlung beruhenden Kühlaggregaten (vgl. beispielsweise DE 2842411 A1) erfolgt eine Berieselung eines das zu kühlende Medium führenden Wärmetauschers mit dem auf der Verdunstungsstrecke gekühlten Verdunstungswasser. Darüber hinaus wurde bereits die vorstehend definierte Bauweise vorgeschlagen, bei der der das zu kühlende Medium führende Wärmetauscher in dem Sammelbecken, in welchem das Verdunstungswasser nach der Verdunstungsstrecke aufgefangen wird, angeordnet ist und von dem dort vorhandenen Wasser umspült wird (vgl. beispielsweise DE 3807784 A1, CH 684966 A5 und JP S52-37249 A). Durch das vollständige Eintauchen des Wärmetauschers in das aufgefangene Verdunstungswasser soll die Gefahr, dass sich auf dem Wärmetauscher Verkrustungen und Ablagerungen bilden, reduziert werden. In der Praxis hat sich das Konzept allerdings, soweit ersichtlich, bisher nicht durchsetzen können.

Zur Klimatisierung und Reinigung von Raumluft wird nach der KR 1020040052638 A Wasser in die mittels eines Gebläses durch einen Luftbefeuchter geführte Luft eingedüst. Das im Kreislauf geführte Wasser wird mittels eines Wärmetauschers, welcher Teil eines Kältekreislaufs ist und in das am Boden des Luftbefeuchters aufgefangene überschüssige Wasser eintaucht, gekühlt. Die so befeuchtete und gekühlte Luft wird über einen Dampfabscheider sowie ein Heiz- und ein Kühlregister geführt.

Die vorliegende Erfindung hat sich zur Aufgabe gemacht, ein praxistaugliches und insbesondere hinsichtlich der Effizienz verbessertes Kühlaggregat der eingangs angegebenen Bauweise bereitzustellen.

Gelöst wird diese Aufgabenstellung gemäß der vorliegenden Erfindung durch das in Anspruch 1 angegebene Kühlaggregat. Das erfindungsgemäße, der eingangs dargelegten Bauweise entsprechende Kühlaggregat zeichnet sich somit weiterhin dadurch aus, dass das Sammelbecken mehrere voneinander abgegrenzte Teilbecken umfasst, dass der Wärmetauscher mehrere strömungstechnisch in Reihe geschaltete, in unterschiedlichen Teilbecken angeordnete Segmente umfasst, dass die Teilbecken zueinander parallel von nach der Verdunstungsstrecke aufgefangenem Verdunstungswasser beaufschlagt werden, dass Zuströmbereich und Abströmbereich des Verdunstungswassers in dem jeweiligen Teilbecken entgegengerichtet zueinander versetzt sind zu Eintritt und Austritt des jeweils zugeordneten Wärmetauschersegments und dass in den einzelnen Teilbecken jeweils eine Abfolge von Strömungsleitelementen mit vertikal zueinander versetzten Durchtrittsquerschnitten angeordnet ist. Besonders charakteristisch für das erfindungsgemäße Kühlaggregat ist demnach die Unterteilung des Sammelbeckens in mehrere voneinander getrennte Teilbecken, die von dem aufgefangenen Verdunstungswasser in dem Sinne strömungstechnisch (nicht zwingend geometrisch!) parallel beaufschlagt werden, dass sich das insgesamt aufgefangene Verdunstungswasser auf die verschiedenen Teilbecken aufteilt. Den Teilbecken sind dabei unterschiedliche Segmente des - in mehrere strömungstechnisch in Reihe geschaltete Wärmetauschersegmente unterteilten - Wärmetauschers für das zu kühlende Medium zugeordnet. Das Verdunstungswasser "regnet" dabei nicht ungeordnet in das jeweilige Teilbecken hinein; vielmehr erfolgt eine räumlich geordnete Zufuhr des dem jeweiligen Teilbecken zufließenden Verdunstungswassers an einem definierten Zuströmbereich. Vergleichbares gilt für die räumlich geordnete Abführung des das jeweilige Teilbecken verlassenden Verdunstungswassers an einem definierten Abströmbereich. Zwischen dem Zuströmbereich und dem Abströmbereich stellt sich eine Strömung des durch das betreffende Teilbecken hindurchfließenden, dabei das zugeordnete Wärmetauschersegment umspülenden Verdunstungswassers ein, wobei die durch den Zuströmbereich und den Abströmbereich definierte Fließrichtung der Verdunstungswasserströmung entgegengerichtet ist zu der Durchströmungsrichtung des zugeordneten Wärmetauschersegments mit dem zu kühlenden Medium, wie sie durch die räumliche Anordnung von Eintritt und Austritt des jeweils zugeordneten Wärmetauschersegments definiert ist. Die weiterhin erfindungsgemäß vorgesehenen Strömungsleitelemente sorgen dabei für einen Kreuzgegenstrom von zu kühlendem Medium (in dem Wärmetauschersegment) und Verdunstungswasser (in dem Teilbecken), und zwar mit einem vertikalen Auf und Ab der Verdunstungswasserströmung. Anders als bei benetzten Wärmetauschern, die dem Luftstrom ausgesetzt sind, ist bei der Erfindung durch die "Unterwasseranordnung" des Wärmetauschers die Gefahr der Bildung von (für die Wärmeübertragung extrem schädlichen) Verkrustungen auf der Oberfläche der Wärmetauscherrohre vernachlässigbar.

Durch das funktional-synergetische Zusammenwirken dieser Charakteristika lässt sich in Anwendung der vorliegenden Erfindung ein Kühlaggregat von bisher nicht erreichbarer Effizienz realisieren, das zudem allen sonstigen praxisrelevanten Anforderungen - sowohl hinsichtlich der Herstellung (z. B. Kosten), als auch hinsichtlich des Betriebs (z. B. Raumbedarf, Zuverlässigkeit, Wartungsaufwand) - genügt. Gerade hinsichtlich eines störungsfreien wartungsarmen Betriebs zeigt die vorliegende Erfindung beachtliche Vorteile gegenüber dem Stand der Technik. Beispielsweise lässt sich bei erfindungsgemäßen Kühlaggregaten eine extrem wirksame Reinigung des nach dem Passieren der Verdunstungsstrecke, wo durch die Luftströmung Fremdkörper in das Verdunstungswasser gelangen können, aufgefangenen Verdunstungswassers erreichen, bevor dieses dem Verdunstungswasserverteiler zugeführt wird. Dies ist ein bedeutender Aspekt. Denn nicht nur werden so Störungen und hierdurch verursachte Betriebsunterbrechungen vermieden; auch kann eine besonders feine und somit effiziente Verrieselung bzw. Zerstäubung des Verdunstungswassers in dem Verdunstungswasserverteiler erfolgen, was wiederum einen entsprechend geringen Raumbedarf der Verdunstungsstrecke zur Folge hat und so eine kompakte Bauweise des Kühlaggregats ermöglicht.

Eine erste bevorzugte Weiterbildung der Erfindung zeichnet sich dadurch aus, dass an zumindest einem der Teilbecken ein Oberflächenskimmer vorgesehen ist, der besonders bevorzugt einen seitlich neben den Teilbecken angeordneten Skimmerkanal umfasst. So lässt sich, unterstützt durch die vertikal mäandernde Strömung des Verdunstungswassers in dem Teilbecken, für eine wirksame Abscheidung von Schwebstoffen und sonstigen aufschwimmenden Verunreinigungen des Verdunstungswassers sorgen. Der Skimmerkanal kann sich dabei insbesondere über mehrere durch die Strömungsleitelemente definierte Kammern des betreffenden Teilbeckens erstrecken; so erfolgt eine mehrstufige Abscheidung leichter, d. h. schwimmfähiger Verunreinigungen. Besonders bevorzugt ist mittels einer Steuerung der Wasserspiegel in dem Sammelbecken bzw. in einzelnen Teilbecken oder Gruppen von Teilbecken einstellbar. So kann er zum Abschlämmen oberflächlicher, schwimmender Verunreinigungen über die Oberflächenskimmer intermittierend angehoben und hernach wieder abgesenkt werden. So wird der Verlust von Verdunstungswasser über die Oberflächenskimmer minimiert, ohne die Wirksamkeit der Reinigung des Verdunstungswassers herabzusetzen. Eine alternierende derartige Abschlämmung von Schwebstoffen aus einzelnen Teilbecken oder Gruppen von Teilbecken ist dabei besonders günstig, weil in diesem Falle das nur bereichsweise Anheben des Wasserspiegels ohne externe Wasserzufuhr, allein durch Umverteilung des aufgefangenen Verdunstungswassers (z. B. Aufstauen einer Seite) auskommt.

Gemäß einer anderen bevorzugten Weiterbildung der Erfindung weist zumindest eines der Teilbecken einen zumindest zur Seite geneigten Boden oder Bodenabschnitt auf. Insbesondere kann der gesamte Boden des betreffenden Teilbeckens zur Seite geneigt sein. Durch eine solche Neigung zumindest eines Teilbecken-Bodenabschnitts kann, unterstützt durch die vertikal mäandernde Strömung des Verdunstungswassers in dem Teilbecken, für eine wirksame Abscheidung von Sinkstoffen und anderen nicht schwimmfähigen Verunreinigungen des Verdunstungswassers gesorgt werden. Hierzu ist besonders bevorzugt an dem Tiefpunkt des jeweiligen geneigten Bodens bzw. Bodenabschnitts mindestens ein Schlammablass angeordnet. Der betreffende Schlammablass ist vorzugsweise an einen seitlich neben den Teilbecken angeordneten Schlammkanal angeschlossen. Der Schlammkanal kann sich dabei insbesondere über mehrere durch die Strömungsleitelemente definierte Kammern des betreffenden Teilbeckens erstrecken, wobei mehrere Schlammablässe an ihn angeschlossen sind; so erfolgt eine mehrstufige Abscheidung schwerer, d. h. nicht schwimmfähiger Verunreinigungen.

Weist das erfindungsgemäße Kühlaggregat zwei - bezogen auf die Längsorientierung der Wärmetauschersegmente - nebeneinander angeordneten Teilbecken auf, so sind die beiden zugeordneten Böden bzw. Bodenabschnitte besonders bevorzugt nach außen hin geneigt. Dies erweist sich als vorteilhaft im Hinblick auf eine gute Zugänglichkeit von Schlammabläufen, die den Schlammablässen oder gegebenenfalls vorgesehenen Schlammkanälen zugeordnet sind und durch die hindurch der an den beiden Böden abgeschiedene Schlamm abgezogen wird. Zwingend ist eine Orientierung der Bodenneigung seitlich nach außen indessen nicht. Vielmehr kommt beispielsweise auch eine umgekehrte, zur Mitte hin orientierte Neigung in Betracht. In diesem Falle könnte sogar zwischen zwei nebeneinander angeordneten Reihen von Teilbecken ein einziger, gemeinsamer Schlammkanal ausreichen.

Eine wiederum andere bevorzugte Weiterbildung der Erfindung zeichnet sich dadurch aus, dass oberhalb der einzelnen Teilbecken Auffangflächen für das Verdunstungswasser angeordnet sind, welche zu einem jeweiligen Zuströmbereich für das aufgefangene Verdunstungswasser zum zugeordneten Teilbecken hin geneigt sind. Das nach dem Passieren der Verdunstungsstrecke auf die Verdunstungswasser-Auffangflächen niedergehende Verdunstungswasser wird auf diese Weise zuverlässig der jeweiligen Zuströmöffnung zugeleitet, wo die weiter oben bereits beschriebene gerichtete Durchströmung des betreffenden Teilbeckens mit Verdunstungswasser beginnt. Die Verdunstungswasser-Auffangflächen sind bevorzugt eben, so dass auf ihnen ein möglichst gleichmäßiger Wasserfilm besteht und das aufgefangene Verdunstungswasser in das jeweils zugeordnete Teilbecken auf dessen gesamter Breite eingeleitet wird. Von ganz besonderem Vorteil ist, wenn an den Zuströmbereichen für das aufgefangene Verdunstungswasser zum jeweils zugeordneten Teilbecken Filterelemente angeordnet sind. Diese können insbesondere auf das (frühzeitige) Entfernen vergleichsweise grober Verschmutzungspartikel ausgelegt sein.

Gemäß einer nochmals anderen bevorzugten Weiterbildung der Erfindung umfasst die Verdunstungsstrecke mindestens einen unterhalb des Verdunstungswasserverteilers angeordneten Füllkörper. Der benetzte Füllkörper erhöht die Verweildauer des Verdunstungswassers in der Verdunstungsstrecke, was sich effizienzsteigernd auswirkt und vergleichsweise kleine Baugrößen ermöglicht. Insbesondere kann dabei für mehrere Teilbecken ein gemeinsamer Füllkörper vorgesehen sein.

Weist das erfindungsgemäße Kühlaggregat mindestens zwei - bezogen auf die Längsorientierung der Wärmetauschersegmente - hintereinander angeordnete Teilbecken auf, so ist besonders bevorzugt seitlich neben den Teilbecken ein Pumpentank angeordnet, an den die mindestens zwei Teilbecken über jeweils einen Abströmbereich des Verdunstungswassers angeschlossen sind und aus dem das Verdunstungswasser mittels der Verdunstungswasserpumpe abgezogen wird. Die Abströmbereiche sind dabei besonders bevorzugt bodennah in einer den jeweiligen Pumpentank von den benachbarten Teilbecken trennenden Seitenwand angeordnet. Weist das Kühlaggregat zwei - bezogen auf die Längsorientierung der Wärmetauschersegmente - nebeneinander angeordnete Reihen von Teilbecken auf, so sind besonders bevorzugt zwei seitlich angeordnete Pumpentanks vorgesehen. Zwingend ist dies indessen nicht. Vielmehr kommt beispielsweise auch in Betracht, zwischen zwei nebeneinander angeordneten Reihen von Teilbecken einen einzigen, gemeinsamen Pumpentank anzuordnen.

Im Hinblick auf eine vorteilhafte Einbettung des erfindungsgemäßen Kühlaggregats in eine technische Umgebung ist, gemäß einer wiederum anderen bevorzugten Weiterbildung der Erfindung, von Vorteil, wenn der Eintritt und der Austritt des Wärmetauschers für das zu kühlende Medium auf der gleichen Seite des Sammelbeckens angeordnet sind. Auf der den Anschlüssen des Wärmetauschers gegenüberliegenden Seite des Sammelbeckens ist in diesem Falle mindestens eine Umlenkung vorgesehen. So ergeben sich die weiter oben bereits mehrfach erläuterten Bauweisen, bei denen mindestens zwei - bezogen auf die Längsorientierung der Wärmetauschersegmente - nebeneinander angeordnete Teilbecken existieren.

Im Interesse einer hohen Flexibilität bei wirkungsgradoptimierter Anpassbarkeit des Kühlaggregats an die jeweilige Betriebssituation umfasst das Kühlaggregat besonders bevorzugt - zusätzlich zur Verdunstungskühleinheit - eine Trockenkühleinheit, die alternativ oder additiv zur Verdunstungskühleinheit zuschaltbar ist und einen weiteren Wärmetauscher für das zu kühlende Medium aufweist. Mittels einer Ventilgruppe lässt sich bedarfsabhängig eine Beaufschlagung des Wärmetauschers der Verdunstungskühleinheit und/oder eine Beaufschlagung des Wärmetauschers der Trockenkühleinheit einstellen. Diese Weiterbildung zeichnet sich im Übrigen durch einen minimalen Wasserverbrauch und eine maximale Ausfallsicherheit aus.

Einzelne Komponenten der Verdunstungskühleinheit sind besonders bevorzugt durch entsprechende Wartungsöffnungen in dem Gehäuse erreichbar bzw. einzeln herausnehmbar. Sie können in Form von Einschubkassetten ausgeführt sein. Dies kommt einer einfachen und unkomplizierten Wartung entgegen und steigert auf diese Weise die Betriebssicherheit und Verfügbarkeit.

Im Folgenden wird die vorliegende Erfindung anhand eines in der Zeichnung veranschaulichten bevorzugten Ausführungsbeispiels näher erläutert. Dabei zeigt
- Fig. 1: in teilweise schematischer Ansicht einen Schnitt durch ein erfindungsgemäßes, eine Verdunstungskühleinheit und eine Trockenkühleinheit umfassendes Kühlaggregat,
- Fig. 2: in perspektivischer Ansicht schräg von oben das Sammelbecken der Verdunstungskühleinheit des Kühlaggregats nach Fig. 1 samt Aufsatz,
- Fig. 3: in gleicher perspektivischer Ansicht das Sammelbecken nach Fig. 2 ohne Aufsatz,
- Fig. 4: aus einer anderen Perspektive, wiederum schräg von oben, das Sammelbecken nach den Figuren 2 und 3,
- Fig. 5: in perspektivischer Ansicht schräg von unten das Sammelbecken (teilweise ohne Boden) nach den Figuren 2 bis 4.

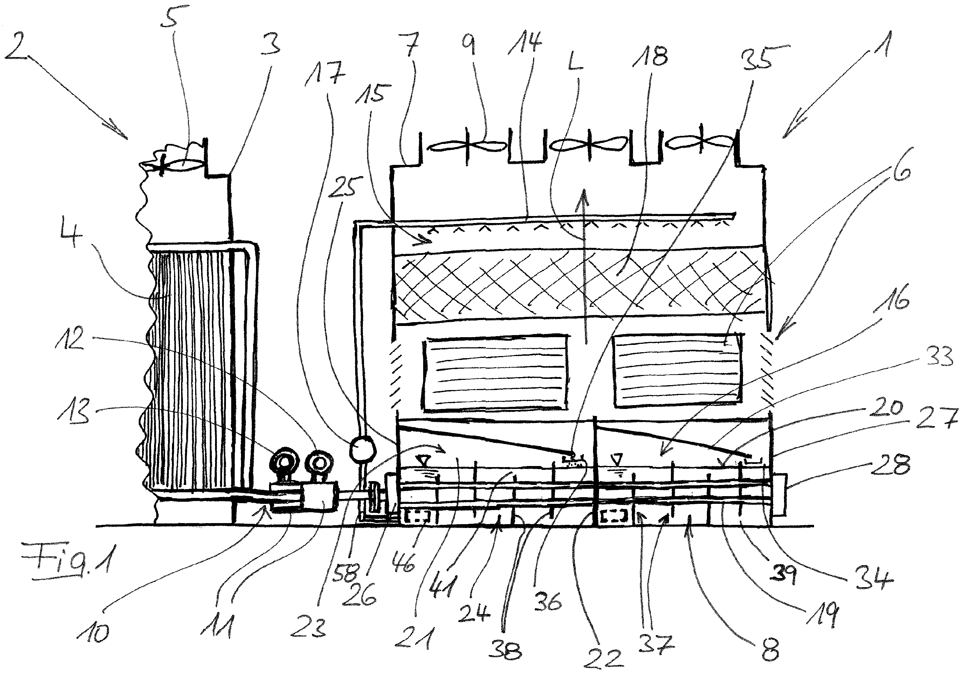

Das in Fig. 1 veranschaulichte, der Kühlung eines zu kühlenden Mediums dienende Kühlaggregat umfasst zwei Kühleinheiten, nämlich einerseits eine Verdunstungskühleinheit 1 und andererseits eine Trockenkühleinheit 2. Die Trockenkühleinheit 2 - sie ist, da es auf ihre Details vorliegend nicht ankommt und sie daher dem hinlänglich bekannten Stand der Technik entsprechen kann, nur ausschnittsweise dargestellt - umfasst insbesondere ein Lufteintrittsöffnungen aufweisendes Gehäuse 3, einen Wärmetauscher 4 für das zu kühlende Medium und Ventilatoren 5. Auch die Verdunstungskühleinheit 1 umfasst ein Lufteintrittsöffnungen 6 aufweisendes Gehäuse 7, einen Wärmetauscher 8 für das zu kühlende Medium und Ventilatoren 9. Der Wärmetauscher 4 der Trockenkühleinheit 2 und der Wärmetauscher 8 der Verdunstungskühleinheit 1 sind über eine Leitungsanordnung 10 mit darin angeordneten Ventilen 11 untereinander und mit dem Vorlauf 12 und dem Rücklauf 13 für das zu kühlende Medium verbunden.

Die Verdunstungskühleinheit 1 umfasst einen Verdunstungswasserkreislauf mit einem Verdunstungswasser verrieselndem Verdunstungswasserverteiler 14, einer Verdunstungsstrecke 15, einem Sammelbecken 16 für aufgefangenes Verdunstungswasser, und einer Verdunstungswasserpumpe 17, mittels derer aus dem Sammelbecken 16 abgezogenes Verdunstungswasser dem Verdunstungswasserverteiler 14 zugeführt wird. In üblicher Weise ist auch, ohne dass dies gezeigt wäre, eine Einspeisung für Wasser zum Ersatz des Wasserverbrauchs vorgesehen. Die - einen Füllkörper (Pad) 18 aufweisende - Verdunstungsstrecke 15 ist dabei der (aufwärts gerichteten) Luftströmung L ausgesetzt, die durch die (Lichteinfall verhindernde Jalousien aufweisenden) Lufteintrittsöffnungen 6 in das Gehäuse 7 eintritt und dieses über die Ventilatoren 9 wieder verlässt.

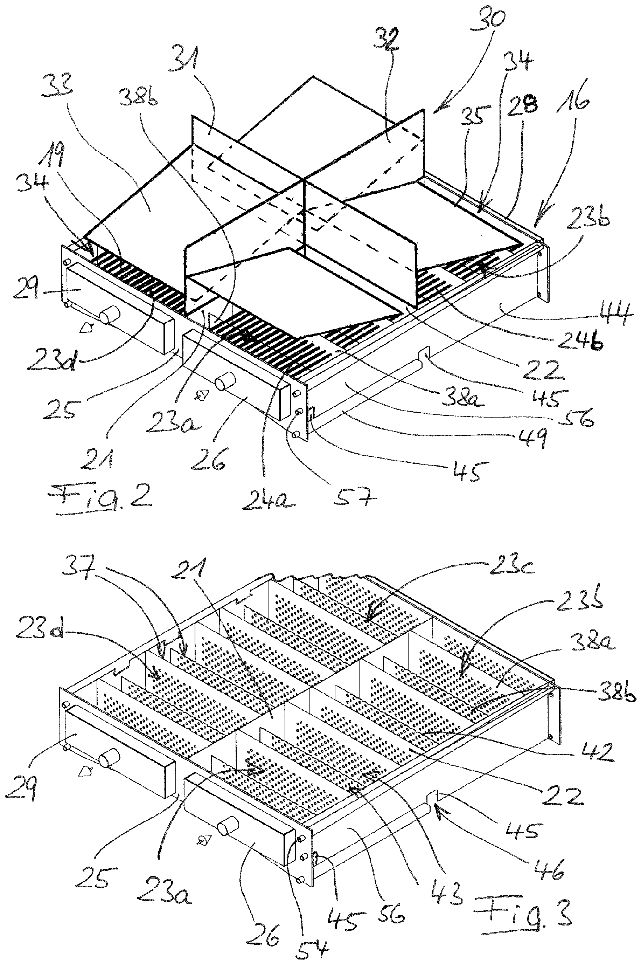

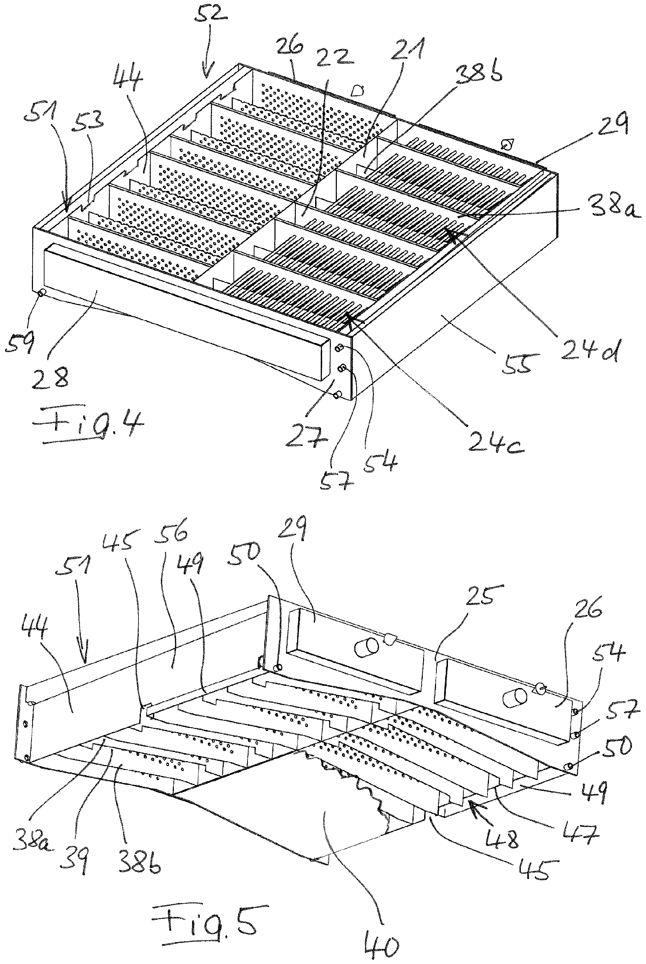

Der Wärmetauscher 8 ist in dem Sammelbecken 16 der Verdunstungskühleinheit 1 angeordnet und von dem dort vorhandenen Wasser umspült. Sämtliche Wärmetauscherrohre 19 - diese sind aus Gründen der Übersichtlichkeit in den Fig. 3 und 5 gar nicht und in Fig. 4 nur teilweise dargestellt - befinden sich somit unterhalb des Wasserspiegels 20 des in dem Sammelbecken 16 befindlichen Verdunstungswassers.

Mittels einer Längstrennwand 21 und einer Quertrennwand 22 ist das Sammelbecken 16 in vier voneinander abgegrenzte Teilbecken 23 unterteilt. Der Wärmetauscher 8 durchzieht alle vier Teilbecken 23a, 23b, 23c und 23d. In jedem der vier Teilbecken 23 ist somit ein zugeordnetes Wärmetauschersegment 24 angeordnet, wobei allerdings jeweils zwei Wärmetauschersegmente 24a und 24b bzw. 24c und 24d an der Quertrennwand 22 dergestalt baulich ineinander übergehen, dass die Wärmetauscherrohre 19 durch die Quertrennwand 22 unterbrechungsfrei hindurch treten. Die vier Wärmetauschersegmente 24a, 24b, 24c und 24d sind strömungstechnisch in Reihe geschaltet. So gelangt das über den an einer ersten Stirnseite 25 des Sammelbeckens 16 angeordneten Eintritt 26 in den Wärmetauscher 8 eintretende zu kühlende Medium über das erste und das zweite Wärmetauschersegment 24a und 24b, die an der gegenüberliegenden zweiten Stirnseite 27 des Sammelbeckens 16 angeordnete Umlenkung 28 und das dritte und das vierte Wärmetauschersegment 24c und 24d zum wiederum an der ersten Stirnseite 25 des Sammelbeckens 16 angeordneten Austritt 29.

Das Verdunstungswasser, das die Verdunstungsstrecke 15 passiert hat, gelangt dergestalt in das Sammelbecken 16, dass die vier Teilbecken 23a, 23b, 23c und 23d zueinander strömungstechnisch parallel von jenem aufgefangenen Verdunstungswasser beaufschlagt werden. Das aus dem Füllkörper 18 abtropfende Verdunstungswasser gelangt somit nur jeweils zu einem der vier Teilbecken 23.

Ein oberhalb des Sammelbeckens 16 angeordneter Aufsatz 30 (vgl. Fig. 2) mit einem Quertrennwand-Oberteil 31 und einem Längstrennwand-Oberteil 32 weist vier Auffangflächen 33 auf, jeweils eine oberhalb eines zugeordneten Teilbeckens 23. Die im Wesentlichen ebenen Auffangflächen 33 sind dabei dergestalt geneigt angeordnet, dass das durch sie aufgefangene Verdunstungswasser zu einem sich quer über die Breite des entsprechenden Teilbeckens 23 erstreckenden Zuströmbereich 34 für das Verdunstungswasser in das betreffende Teilbecken 23 geleitet wird. Jeweils am Ablaufbereich 35 der Auffangfläche 33 ist dabei ein als Filterrinne 36 ausgeführtes Filterelement angeordnet.

In jedem der vier Teilbecken 23 sind Strömungsleitelemente 37 in Form von im Wesentlichen vertikal und parallel zur Quertrennwand 22 orientierten (von den Wärmetauscherrohren 19 durchsetzten) Strömungsleitblechen 38 angeordnet. Diese bilden eine Abfolge dergestalt, dass ihre Durchtrittsquerschnitte alternierend vertikal zueinander versetzt sind. Das dem jeweiligen Zuströmbereich 34 nächstliegende Strömungsleitblech 38a weist einen bodennahen Durchtrittsquerschnitt 39 auf, erstreckt sich aber nach oben über den Wasserspiegel 20 hinaus. Das nächstfolgende Strömungsleitblech 38b ist demgegenüber zum Boden 40 des Teilbeckens 23 hin dicht abgeschlossen, hat aber einen wasserspiegelseitigen Durchtrittsquerschnitt 41, indem sich seine Oberkante 42 knapp unterhalb des Wasserspiegels 20 befindet. Für das nächstfolgende Paar von Strömungsleitblechen 38a, 38b gilt entsprechendes. So ist das jeweilige Teilbecken 23 mittels der Strömungsleitbleche 38 in eine Mehrzahl von Kammern 43, welche zur Bildung einer vertikalen Mäanderströmung im Wesentlichen vertikal von oben nach unten oder aber von unten nach oben durchströmt sind, unterteilt. Jeweils in jener Kammer 43, die dem jeweiligen Zuströmbereich 34 gegenüber liegt, ist in der Seitenwand 44 des Sammelbeckens 16 ein Durchbruch 45 vorgesehen, der den Abströmbereich 46 des Verdunstungswassers aus dem betreffenden Teilbecken 23 bildet. In jedem Teilbecken 23 sind der Zuströmbereich 34 und Abströmbereich 46 des Verdunstungswassers entgegengerichtet zueinander versetzt zu Eintritt und Austritt des jeweils zugeordneten Wärmetauschersegments 24; die globale, durch die Zuströmung des Verdunstungswassers zu dem betreffenden Teilbecken 23 und dessen Abströmung aus diesem definierte Fließrichtung des Verdunstungswassers in dem jeweiligen Teilbecken ist somit entgegengerichtet zu der Fließrichtung des zu kühlenden Mediums in dem zugeordneten Wärmetauschersegment 24.

Die vier Teilbecken 23 weisen jeweils einen nach außen hin zur Seite geneigten Boden 40 auf. An den beiden Seitenwänden 44 des Sammelbeckens 16 sind bodennahe Aussparungen 47 vorgesehen. Diese bilden Schlammablässe 48 für die betreffenden Kammern 43 des jeweiligen Teilbeckens 23. Die Schlammablässe 48 kommunizieren mit einem seitlich neben den Teilbecken 23 angeordneten Schlammkanal 49 mit einem an der ersten Stirnseite 25 des Sammelbeckens 16 angeordneten Schlammablauf 50.

Zu beiden Seiten des Sammelbeckens 16 erstrecken sich, außen an der betreffenden Seitenwand 44 nahe deren Oberkante angeordnet, Skimmerkanäle 51. Diese sind jeweils Teil eines Oberflächenskimmers 52. Die Skimmerkanäle 51 sind dabei, wenn der Wasserspiegel 20 des in dem Sammelbecken 16 vorhandenen Verdunstungswassers durch entsprechende Einflussnahme einer Steuerung so weit angehoben wird, über Aussparungen 53 der Seitenwand 44 oberflächlich an die gefluteten Teilbecken angeschlossen. Sie weisen jeweils ein leichtes Gefälle und einen stirnseitigen Ablauf 54 auf.

Seitlich neben dem Sammelbecken 16, von den Teilbecken 23 durch die jeweilige Seitenwand 44 des Sammelbeckens 16 abgetrennt und durch zusätzliche Außenwände 55 definiert, sind zwei Pumpentanks 56 angeordnet. In diese münden die Abströmbereiche 46 des Verdunstungswassers der beiden jeweils benachbarten Teilbecken 23. An der ersten Stirnseite 25 und der zweiten Stirnseite 27 des Sammelbeckens 16 sind mit den Pumpentanks 56 kommunizierende Anschlussstutzen 57 für eine zu der Verdunstungswasserpumpe 17 führende Leitungsanordnung 58 vorgesehen. Zum Spülen der Pumpentanks 56 dienen Spülstutzen 59.

Lediglich zur Vermeidung von Missverständnissen ist darauf hinzuweisen, dass aus dem Umstand, dass nicht sämtliche Details in sämtlichen Figuren der Zeichnung veranschaulicht sind, keine Widersprüche oder dergleichen hergeleitet werden können. Entsprechendes gilt für das Verhältnis der diverse Details veranschaulichenden Figuren 2 bis 5 im Verhältnis zu der teilweise schematisch ausgeführten Fig. 1.

## Patentansprüche

1. Kühlaggregat, umfassend eine Verdunstungskühleinheit (1) mit einem Verdunstungswasserkreislauf und einem diesem ausgesetzten Wärmetauscher (8) für das zu kühlende Medium, wobei der Verdunstungswasserkreislauf ein Sammelbecken (16), eine Verdunstungswasserpumpe (17), einen Verdunstungswasserverteiler (14) und eine einer Luftströmung (L) ausgesetzte Verdunstungsstrecke (15) aufweist und der Wärmetauscher (8) in dem Sammelbecken (16) angeordnet und von dem dort vorhandenen Wasser umspült ist, **gekennzeichnet durch** folgenden Merkmale :
das Sammelbecken (16) umfasst mehrere voneinander abgegrenzte Teilbecken (23; 23a, 23b, 23c, 23d);
der Wärmetauscher (8) umfasst mehrere strömungstechnisch in Reihe geschaltete, in unterschiedlichen Teilbecken (23; 23a, 23b, 23c, 23d) angeordnete Wärmetauschersegmente (24; 24a, 24b, 24c, 24d);
die Teilbecken (23; 23a, 23b, 23c, 23d) werden zueinander parallel von nach der Verdunstungsstrecke (15) aufgefangenem Verdunstungswasser beaufschlagt;
Zuströmbereich (34) und Abströmbereich (46) des Verdunstungswassers in dem jeweiligen Teilbecken (23; 23a, 23b, 23c, 23d) sind entgegengerichtet zueinander versetzt zu Eintritt und Austritt des jeweils zugeordneten Wärmetauschersegments (24; 24a, 24b, 24c, 24d);
in den einzelnen Teilbecken (23; 23a, 23b, 23c, 23d) ist jeweils eine Abfolge von Strömungsleitelementen (37) mit vertikal zueinander versetzten Durchtrittsquerschnitten (39, 41) angeordnet.

2. Kühlaggregat nach Anspruch 1, **dadurch gekennzeichnet, dass** an zumindest einem der Teilbecken (23; 23a, 23b, 23c, 23d) ein Oberflächenskimmer (52) vorgesehen ist.

3. Kühlaggregat nach Anspruch 2, **dadurch gekennzeichnet, dass** der Oberflächenskimmer (52) einen seitlich neben den Teilbecken (23; 23a, 23b, 23c, 23d) angeordneten Skimmerkanal (51) umfasst.

4. Kühlaggregat nach einem der Ansprüche 1 bis 3, **dadurch gekennzeichnet, dass** zumindest eines der Teilbecken (23; 23a, 23b, 23c, 23d) einen zur Seite geneigten Boden (40) oder Bodenabschnitt aufweist.

5. Kühlaggregat nach Anspruch 4, **dadurch gekennzeichnet, dass** an dem Tiefpunkt des geneigten Bodens (40) bzw. Bodenabschnitts mindestens ein Schlammablass (48) angeordnet ist.

6. Kühlaggregat nach Anspruch 5, **dadurch gekennzeichnet, dass** der mindestens eine Schlammablass (48) an einen seitlich neben den Teilbecken (23; 23a, 23b, 23c, 23d) angeordneten Schlammkanal (49) angeschlossen ist.

7. Kühlaggregat nach einem der Ansprüche 4 bis 6, **dadurch gekennzeichnet, dass** bei zwei nebeneinander angeordneten Teilbecken (23a, 23d; 23b, 23c) die beiden zugeordneten Böden (40) bzw. Bodenabschnitte nach außen hin geneigt sind.

8. Kühlaggregat nach einem der Ansprüche 1 bis 7, **dadurch gekennzeichnet, dass** oberhalb der einzelnen Teilbecken (23; 23a, 23b, 23c, 23d) zu einem jeweiligen Zuströmbereich (34) für das aufgefangene Verdunstungswasser zum zugeordneten Teilbecken (23; 23a, 23b, 23c, 23d) hin geneigte Auffangflächen (33) angeordnet sind.

9. Kühlaggregat nach Anspruch 8, **dadurch gekennzeichnet, dass** an den Zuströmbereichen (34) für das aufgefangene Verdunstungswasser zum zugeordneten Teilbecken (23; 23a, 23b, 23c, 23d) Filterelemente angeordnet sind.

10. Kühlaggregat nach einem der Ansprüche 1 bis 9, **dadurch gekennzeichnet, dass** die Verdunstungsstrecke (15) mindestens einen unterhalb des Verdunstungswasserverteilers (14) angeordneten Füllkörper (18) umfasst.

11. Kühlaggregat nach Anspruch 10, **dadurch gekennzeichnet, dass** für mehrere Teilbecken (23) ein gemeinsamer Füllkörper (18) vorgesehen ist.

12. Kühlaggregat nach einem der Ansprüche 1 bis 11, **dadurch gekennzeichnet, dass** seitlich neben den Teilbecken (23; 23a, 23b, 23c, 23d) ein Pumpentank (56) angeordnet ist, an den mindestens zwei Teilbecken (23a, 23b; 23c, 23d) über jeweils einen Abströmbereich (46) des Verdunstungswassers angeschlossen sind.

13. Kühlaggregat nach Anspruch 12, **dadurch gekennzeichnet, dass** bei zwei paarweise nebeneinander angeordneten Teilbecken (23a, 23d; 23b, 23c) zwei seitlich angeordnete Pumpentanks (56) vorgesehen sind.

14. Kühlaggregat nach einem der Ansprüche 1 bis 13, **dadurch gekennzeichnet, dass** der Eintritt (26) und der Austritt (29) des Wärmetauschers (8) für das zu kühlende Medium auf der gleichen Seite des Sammelbeckens (16) angeordnet sind.

15. Kühlaggregat nach einem der Ansprüche 1 bis 14, **dadurch gekennzeichnet, dass** es zusätzlich zur Verdunstungskühleinheit (1) eine Trockenkühleinheit (2) umfasst, die alternativ oder additiv zur Verdunstungskühleinheit zuschaltbar ist und einen weiteren Wärmetauscher (4) für das zu kühlende Medium aufweist.

## Claims

1. Cooling unit, comprising an evaporative cooling unit (1) having an evaporative water circuit and a heat exchanger (8) exposed thereto for the medium to be cooled, wherein the evaporative water circuit has a collection basin (16), an evaporative water pump (17), an evaporative water distributor (14) and an evaporation path (15) exposed to an air flow (L), and the heat exchanger (8) is arranged in the collection basin (16) and washed around by the water present there, **characterized by** the following features: the collection basin (16) comprises a plurality of partial basins (23; 23a, 23b, 23c, 23d) delimited from one another; the heat exchanger (8) comprises a plurality of heat exchanger segments (24; 24a, 24b, 24c, 24d) arranged in different partial basins (23; 23a, 23b, 23c, 23d) and fluidically connected in series; evaporation water collected downstream of the evaporation path (15) is applied to the partial basins (23; 23a, 23b, 23c, 23d) parallel to one another; inflow region (34) and outflow region (46) of the evaporation water in the respective partial basin (23; 23a, 23b, 23c, 23d) are offset in opposite directions from one another to the inlet and outlet of the respectively assigned heat exchanger segment (24; 24a, 24b, 24c, 24d); a succession of flow-guiding elements (37) with passage cross-sections (39, 41) vertically offset from one another is respectively arranged in the individual partial basins (23; 23a, 23b, 23c, 23d).

2. Cooling unit according to Claim 1, **characterized in that** a surface skimmer (52) is provided on at least one of the partial basins (23; 23a, 23b, 23c, 23d).

3. Cooling unit according to Claim 2, **characterized in that** the surface skimmer (52) comprises a skimmer channel (51) arranged laterally next to the partial basins (23; 23a, 23b, 23c, 23d).

4. Cooling unit according to one of Claims 1 to 3, **characterized in that** at least one of the partial basins (23; 23a, 23b, 23c, 23d) has a base (40) or base section tilted to the side.

5. Cooling unit according to Claim 4, **characterized in that** at least one sludge drain (48) is arranged at the lowest point of the tilted base (40) or base section.

6. Cooling unit according to Claim 5, **characterized in that** the at least one sludge drain (48) is connected to a sludge channel (49) arranged laterally next to the partial basins (23; 23a, 23b, 23c, 23d).

7. Cooling unit according to one of Claims 4 to 6, **characterized in that** in the case of two partial basins (23a, 23d; 23b, 23c) arranged next to one another, the two assigned bases (40) or base sections are outwardly inclined.

8. Cooling unit according to one of Claims 1 to 7, **characterized in that** collection surfaces (33) inclined towards a respective inflow region (34) for the collected evaporation water to the assigned partial basin (23; 23a, 23b, 23c, 23d) are arranged above the individual partial basins (23; 23a, 23b, 23c, 23d).

9. Cooling unit according to Claim 8, **characterized in that** filter elements are arranged at the inflow regions (34) for the collected evaporation water to the assigned partial basin (23; 23a, 23b, 23c, 23d).

10. Cooling unit according to one of Claims 1 to 9, **characterized in that** the evaporation path (15) comprises at least one filling body (18) arranged below the evaporative water distributor (14).

11. Cooling unit according to Claim 10, **characterized in that** a shared filling body (18) is provided for a plurality of partial basins (23).

12. Cooling unit according to one of Claims 1 to 11, **characterized in that** a pump tank (56) is arranged laterally next to the partial basins (23; 23a, 23b, 23c, 23d), to which pump tank (56) at least two partial basins (23a, 23b; 23c, 23d) are connected respectively via an outflow region (46) of the evaporation water.

13. Cooling unit according to Claim 12, **characterized in that** two laterally arranged pump tanks (56) are provided in the case of two partial basins (23a, 23d; 23b, 23c) arranged in pairs next to each other.

14. Cooling unit according to one of Claims 1 to 13, **characterized in that** the inlet (26) and the outlet (29) of the heat exchanger (8) are arranged on the same side of the collection basin (16) for the medium to be cooled.

15. Cooling unit according to one of Claims 1 to 14, **characterized in that** it comprises, in addition to the evaporative cooling unit (1), a dry cooling unit (2), which is connectable alternatively or in addition to the evaporative cooling unit and has a further heat exchanger (4) for the medium to be cooled.

## Revendications

1. Groupe réfrigérant comprenant une unité de réfrigération par évaporation (1) avec un circuit d'eau d'évaporation et un échangeur de chaleur (8) exposé à celui-ci pour le milieu à réfrigérer, sachant que le circuit d'eau d'évaporation comporte un bac collecteur (16), une pompe d'eau d'évaporation (17), un distributeur d'eau d'évaporation (14) et une section d'évaporation (15) exposée à un flux d'air (L) et l'échangeur de chaleur (8) est disposé dans le bac collecteur (16) et est baigné par l'eau qui y est présente, **caractérisé par** les caractéristiques suivantes :
le bac collecteur (16) comprend plusieurs parties de bac (23, 23a, 23b, 23c, 23d) délimitées l'une de l'autre,
l'échangeur de chaleur (8) comprend plusieurs segments d'échangeur de chaleur (24, 24a, 24b, 24c, 24d) disposés selon la technique d'écoulement branchés en série dans des parties de bac (23, 23a, 23b, 23c, 23d) différentes, les parties de bac (23, 23a, 23b, 23c, 23d) sont sollicitées parallèlement l'une par rapport à l'autre par l'eau d'évaporation recueillie après la section d'évaporation (15),
une zone d'arrivée (34) et une zone d'écoulement (46) de l'eau d'évaporation dans les parties de bac (23, 23a, 23b, 23c, 23d) respectives sont agencées décalées l'une par rapport à l'autre par rapport à l'entrée et à la sortie du segment d'échangeur de chaleur (24, 24a, 24b, 24c, 24d) respectivement attribué,
une succession d'éléments de guidage d'écoulement (37) est respectivement disposée dans les parties de bac (23, 23a, 23b, 23c, 23d) individuelles avec des sections transversales de passage (39, 41) verticalement décalées les unes par rapport aux autres.

2. Groupe réfrigérant selon la revendication 1, **caractérisé en ce qu'**un récupérateur de surface (52) est prévu sur au moins une des parties de bac (23, 23a, 23b, 23c, 23d).

3. Groupe réfrigérant selon la revendication 2, **caractérisé en ce que** le récupérateur de surface (52) comprend un conduit de récupérateur (51) disposé latéralement près des parties de bac (23, 23a, 23b, 23c, 23d).

4. Groupe réfrigérant selon l'une quelconque des revendications 1 à 3, **caractérisé en ce qu'** au moins une des parties de bac (23, 23a, 23b, 23c, 23d) comporte un fond (40) ou section de fond incliné vers le côté.

5. Groupe réfrigérant selon la revendication 4, **caractérisé en ce qu'**au moins une évacuation des boues (48) est disposée au point bas du fond (40) ou de la section de fond incliné.

6. Groupe réfrigérant selon la revendication 5, **caractérisé en ce qu'**au moins une évacuation des boues (48) est raccordée à un conduit de boues (49) disposé latéralement près des parties de bac (23, 23a, 23b, 23c, 23d).

7. Groupe réfrigérant selon l'une quelconque des revendications 4 à 6, **caractérisé en ce que** pour deux parties de bac (23, 23d, 23b, 23c) disposées l'une à côté de l'autre, les deux fonds (40) ou sections de fond attribués sont inclinés vers l'extérieur.

8. Groupe réfrigérant selon l'une quelconque des revendications 1 à 7, **caractérisé en ce que** des surfaces de collecte (33) inclinées vers les parties de bac (23, 23a, 23b, 23c, 23d) attribuées sont disposées au-dessus des parties de bac (23, 23a, 23b, 23c, 23d) individuelles vers une zone d'arrivée (34) respective pour l'eau d'évaporation recueillie.

9. Groupe réfrigérant selon la revendication 8, **caractérisé en ce que** des éléments de filtre sont disposés sur les zones d'arrivée (34) pour l'eau d'évaporation recueillie pour la partie de bac (23, 23a, 23b, 23c, 23d) attribuée.

10. Groupe réfrigérant selon l'une quelconque des revendications 1 à 9, **caractérisé en ce que** la section d'évaporation (15) comprend au moins un corps de remplissage (18) disposé en dessous du distributeur d'eau d'évaporation (14).

11. Groupe réfrigérant selon la revendication 10, **caractérisé en ce qu'**un corps de remplissage (18) commun est prévu pour plusieurs parties de bac (23).

12. Groupe réfrigérant selon l'une quelconque des revendications 1 à 11, **caractérisé en ce qu'**un réservoir de pompage (56) est disposé latéralement près des parties de bac (23, 23a, 23b, 23c, 23d), sur lequel sont respectivement raccordées au moins deux parties de bac (23a, 23b, 23c, 23d) par le biais d'une zone d'écoulement (46) de l'eau d'évaporation.

13. Groupe réfrigérant selon la revendication 12, **caractérisé en ce que** deux réservoirs de pompage (56) disposés latéralement sont prévus pour deux parties de bac (23a, 23d, 23b, 23c) disposées par paire l'une à côté de l'autre.

14. Groupe réfrigérant selon l'une quelconque des revendications 1 à 13, **caractérisé en ce que** l'entrée (26) et la sortie (29) de l'échangeur de chaleur (8) pour le milieu à réfrigérer sont disposés sur le même côté du bac collecteur (16).

15. Groupe réfrigérant selon l'une quelconque des revendications 1 à 14, **caractérisé en ce qu'**il comprend une unité de réfrigération à sec (2) en plus de l'unité de réfrigération par évaporation (1), qui peut être connectée en plus de façon alternative ou additionnelle à l'unité de réfrigération par évaporation et comporte un autre échangeur de chaleur (4) pour le milieu à réfrigérer.
